(19) Europäisches Patentamt

European Patent Office

Office européen des brevets

(11) **EP 1 463 217 A1**

(12) **EUROPEAN PATENT APPLICATION**

(43) Date of publication:
**29.09.2004 Bulletin 2004/40**

(51) Int Cl.⁷: **H04B 7/26**

(21) Application number: **04250919.0**

(22) Date of filing: **20.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Khan, Farooq Ullah**<br>**Manalapan New Jersey 07726 (US)** |
| (30) Priority: **24.03.2003 US 395531** | (74) Representative:<br>**Watts, Christopher Malcolm Kelway, Dr. et al**<br>**Lucent Technologies NS UK Ltd**<br>**5 Mornington Road**<br>**Woodford Green Essex, IG8 0TU (GB)** |
| (71) Applicant: **LUCENT TECHNOLOGIES INC.**<br>**Murray Hill, New Jersey 07974-0636 (US)** | |

(54) **A method of scheduling grant transmission in a wireless communication system**

(57)     A method of transmitting control information in a wireless communication system, such as for reverse link packet access transmission. The method includes transmitting forward link data having at least one time multiplexed scheduling grant. The method may also include receiving forward link data having at least one time multiplexed scheduling grant and/or transmitting a packet in response to receiving at least one time multiplexed scheduling grant. Here, the one or more scheduling grants comprise at least one of user identification information, rate indication information, transmit power control information and HARQ information.

## Description

### FIELD OF THE INVENTION

This invention relates to telecommunications and, more particularly, to wireless communications.

### BACKGROUND OF THE INVENTION

Wireless communications systems employ a number of geographically distributed, cellular communication sites or base stations. Each base station supports the transmission and reception of communication signals to and from stationary or fixed, wireless communication devices or units. Each base station handles communications over a particular region commonly referred to as a cell/sector. The overall coverage area for a wireless communications system is defined by the union of cells for the deployed base stations. Here, the coverage areas for adjacent or nearby cell sites may overlap one another to ensure, where possible, contiguous communications coverage within the outer boundaries of the system.

When active, a wireless unit receives signals from at least one base station over a forward link or downlink and transmits signals to at least one base station over a reverse link or uplink. There are many different schemes for defining links or channels for a cellular communication system, including, for example, TDMA (time-division multiple access), FDMA (frequency-division multiple access), and CDMA (code-division multiple access) schemes. In CDMA communications, different wireless channels are distinguished by different channelization codes or sequences that are used to encode different information streams, which may then be modulated at one or more different carrier frequencies for simultaneous transmission. A receiver may recover a particular stream from a received signal using the appropriate code or sequence to decode the received signal.

For voice applications, conventional cellular communication systems employ dedicated links between a wireless unit and a base station. Voice communications are delay-intolerant by nature. Consequently, wireless units in wireless cellular communication systems transmit and receive signals over one or more dedicated links. Here, each active wireless unit generally requires the assignment of a dedicated link on the downlink, as well as a dedicated link on the uplink.

With the explosion of the Internet and the increasing demand for data, resource management has become a growing issue in cellular communication systems. Unlike voice, however, data communications may be relatively delay tolerant and potentially bursty in nature. Data communications, as such, may not require dedicated links on the downlink or the uplink, but rather enable one or more channels to be shared by a number of wireless units. By this arrangement, each of the wireless units on the uplink competes for available resources. Resources to be managed in the uplink include the received power at the base station, and the interference created by each user to other users in the same sector or cell, as well as in other sectors or cells, for example. This is in contrast to the resources to be managed on the downlink, including fixed transmit power budgets.

While data communications may be relatively delay tolerant and potentially bursty in nature, one problem expected in the next generation wireless communication systems is failed data block or data packet transmission. More particularly, a base station, for example, may unsuccessfully transmit one or more data packets from a number of packets to an identified wireless unit. As a result of this failure, the base station may use any number of retransmission techniques, such as hybrid automatic repeat request ("HARQ"), for example, to deliver the data packet(s) not satisfactorily received by the wireless unit.

HARQ allows for the combining of an original transmission with the new transmission, rather than to discard the original transmission. This may improve the probability of correct decoding of the packet. The word "hybrid" in HARQ indicates that Forward Error Correction ("FEC") techniques may be used in addition to ARQ techniques. HARQ combining schemes imply that retransmissions are combined with the original unsuccessful transmissions. Accordingly, HARQ attempts ensure that transmissions resulting in unsuccessful decoding, by themselves, may not be wasted.

Expanded efforts are underway for the evolutionary development of the 3rd Generation (3G) wireless communication systems, such as the Universal Mobile Telecommunications System ("UMTS") and CDMA2000 1x. These and subsequent next generation wireless communication systems are expected to provide high rate data services, such as high-speed downlink packet access ("HSDPA") specification in UMTS and 1x EV-DV specification in CDMA 2000, for example, in support of Internet access and multimedia communication. These approaches - e.g., HSDPA and 1x EV-DV - have begun to address the challenges supporting the separate and potentially conflicting needs of voice and high-speed data simultaneously on the same carrier, in a manner that may also be backwards compatible.

To meet the rapidly developing needs associated with wireless applications such as wireless internet applications, for example, and to support HSDPA, these 3G systems utilize performance enhancing technologies such as Fast Scheduling, Adaptive Modulation and Coding ("AMC") and HARQ. Fast Scheduling is a channel quality sensitive scheduling technique to maximize sector throughput - e.g., a base station assigns resources to one or more users at a given time based on channel quality. AMC technologies enable a selection of a data rate and a transmission format - e.g., modulation level and channel coding rate - that may "suit" the scheduled user's prevailing channel condition.

Delays and measurement errors may result in degraded performance from AMC. In an exemplary scenario, a block of bits or a packet may be sent using QPSK modulation and a code rate of 0.5 and though received erroneously. The packet may then be retransmitted with a new appropriate choice of modulation in addition to at least a few new "parity" bits from the original set of coded bits. HARQ technologies may be used to provide some level of robustness through fast retransmissions at the physical layer, in an attempt to minimize degradation.

Further evolution of 3G standards may include high-speed reverse link packet access, such as from wireless unit to base station, for example. However, a time-multiplexed slot structure may be employed in certain systems supporting reverse link packet access. In these systems, a scheduling grant channel may be difficult to realize, given the time-multiplexed slot structure. Consequently, a need exists for a method of carrying control information, such as scheduling grants, for reverse link packet access transmission.

## SUMMARY OF THE INVENTION

The present invention provides a method of transmitting control information for the reverse link in a wireless communication system. More particularly, the present invention offers a method of transmitting control information for reverse link packet access transmission. For the purposes of the present invention, the control information transmitted for the reverse link may include at least one scheduling grant(s), and/or transmit power control ("TPC") information and/or user identification information (e.g., AT ID) and/or rate indication information and/or HARQ control information.

In one embodiment of the present invention, the method comprises transmitting forward link data having at least one time multiplexed scheduling grant. The one or more time multiplexed scheduling grants comprises at least one of user identification information, rate indication information, transmit power control information and HARQ information.

In another embodiment, the method comprises receiving forward link data having at least one time multiplexed scheduling grant. The one or more time multiplexed scheduling grant(s) comprises at least one of user identification information, rate indication information, transmit power control information and HARQ information.

In yet another embodiment, the method comprises transmitting a packet in response to receiving at least one scheduling grant. The one or more time multiplexed scheduling grant(s) comprises at least one of user identification information, rate indication information, transmit power control information and HARQ information.

## BRIEF DESCRIPTION OF THE DRAWINGS

The present invention will be better understood from reading the following description of non-limiting embodiments, with reference to the attached drawings, wherein below:

**FIG. 1** depicts an exemplary Forward Uplink Scheduling Channel and R-SCH Frame Transmission Timing;
**FIG. 2** depicts an exemplary CDMA2000 High Rate Packet Data ("HRPD") slot structure;
**FIG. 3** depicts an exemplary table of Medium Access Control ("MAC") Channel Use versus MACIndex;
**FIG. 4** depicts an exemplary forward link slot;
**FIG. 5** depicts an exemplary time multiplexing scheme of TPC bits and a scheduling grant on the forward link;
**FIG. 6** depicts an exemplary table illustrating common MACIndex format;
**FIG. 7** depicts an exemplary forward link slot containing a scheduling grant;
**FIG. 8** depicts yet another exemplary forward link slot containing a scheduling grant;
**FIG. 9** depicts still another exemplary forward link slot containing a scheduling grant;
**FIG. 10** depicts a flow chart illustrating the reception and processing of a scheduling grant; and
**FIG. 11** depicts still yet another exemplary forward link slot containing a scheduling grant; and
**FIG. 12** depicts a block diagram of an exemplary wireless communication system.

It should be emphasized that the drawings of the instant application are not to scale but are merely schematic representations, and thus are not intended to portray the specific dimensions of the invention, which may be determined by skilled artisans through examination of the disclosure herein.

## DETAILED DESCRIPTION

Referring to **FIG. 12,** a block diagram of an exemplary wireless communication system 100 is shown. System 100 may include one or more wireless units (e. g., fixed or mobile handsets) 105 in communication with a base station **115.** Wireless unit **105** may communication through base station **115** to exchange packet data with the Internet **120** or some other packet data network **125,** such as a closed corporate network (e.g., intranet) for example. Examples of packet data may include Internet Protocol (IP) datagrams used for applications such as accessing web pages and retrieving email. Such packet data applications may run on wireless unit 105. Alternatively, these packet data applications may run on a separate computer device that uses wireless unit 105 as a wireless modem. In an exemplary embodiment, wireless unit 105 may communicate with wireless network 115 over an air interface, which may be a set of forward and reverse channels, for example. This may be shown as forward link 107 and reverse link 110.

Base station 115 may consist of a single base station and base station controller, or may include a plurality of separately located wireless base stations (e.g., access network and a base station controller connected together as an aggregate base station 115. Each base station may have a predetermined number of traffic channels to use for exchanging data with wireless unit 105. When one of the traffic channels is assigned to a wireless unit 105, that wireless unit 105 may be referred to as an active wireless unit 105. At least one traffic channel may then be assigned to each active wireless unit 105. Base station 115 may be connected with packet data network **120** using back-haul facilities such as T1/E1, STM-x, etc, or any other appropriate type of network connection, such as wireless or wire-line T1 or T3, fiber optic connection, Ethernet, etc. Base station 115 may be connected to multiple packet data networks having more than one type. For example, instead of an intranet, another network 125 might be a public switched telephone network ("PSTN") connected with base station 115 through a data services inter-working function ("IWF").

It should be noted, for the purposes of the present invention, a wireless unit may be characterized as a device providing voice and/or data connectivity to a user. A mobile station may be connected to a computing device such as a laptop, personal computer ("PC"), or it may be a self-contained data device such as a personal digital assistant ("PDA") or cellular handset or phone. Accordingly, a wireless unit is equivalent to, and may be also be referred to as, an access terminal, wireless mobile, mobile station, remote station, user, user equipment ("UE"), subscriber or any other remote user of wireless resources in a wireless communications network.

In the evolving wireless data systems, the scheduling function in the forward link ("FL") - e.g., from the base station to wireless unit - may be moved from base station controller to base station in order to provide "fast" scheduling based on channel quality feedback from the users. Moreover, new technologies, such as adaptive modulation and coding ("AMC") and hybrid ARQ ("HARQ") may also be employed to improve the overall system capacity. In general, a scheduler may select a user for transmission at a given time and AMC allows for the selection of the appropriate transport format (e.g., modulation and coding) for the current channel conditions seen by the user. Due to errors in channel quality estimates, high error rates may result in the transmissions performed at a given rate (transport format). HARQ may make use of fast retransmissions and combining newly received copy of the transmission with the previously received copy to recover from transmission errors without any significant loss in throughout.

Further evolution of 3G standards includes high-speed reverse link packet access from the wireless unit to base station. Most of the techniques used on the FL may also be used on the reverse link to improve the data rates and the system capacity. These techniques include fast scheduling, AMC and HARQ for example.

In order to support the packet scheduling on the reverse link, a scheduling grant containing information about wireless unit identity and other control information needs to be sent on the FL. In the CDMA2000, a code-multiplexed control channel called Forward-Uplink Scheduling Channel (F-USCH) may carry a scheduling grant on the FL for the wireless unit(s) scheduled to transmit in the R-SCH (Reverse Supplemental Channel) frame. The FL scheduling grant channel is sent on a Walsh code that is orthogonal to the code(s) used for FL data transmission.

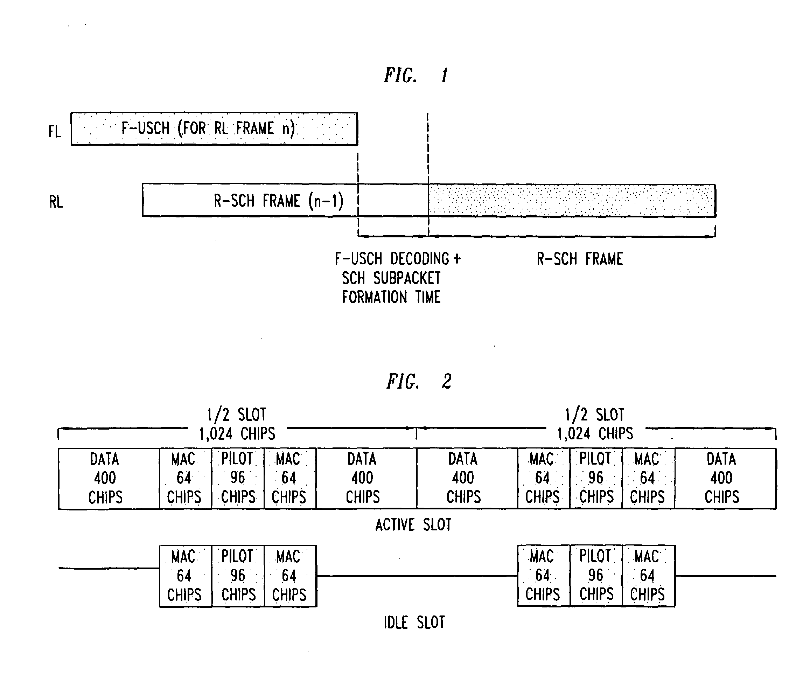

Referring to **FIG. 1,** an example of Forward Uplink Scheduling Channel and R-SCH Frame Transmission Timing is illustrated. Here, a wireless unit transmits a packet in the R-SCH frame on the RL. The transmission of the packet is performed in response to a scheduling grant message on the FL.

In the CDMA2000 High Rate Packet Data ("HRPD"), also known as 1xEV-DO, the FL may use a time-multiplexed structure. For example, both the data and the control information may use the same set of Walsh codes but the transmission of data and the physical layer control information may take place orthogonally in time. Referring to **FIG. 2,** an exemplary structure for CDMA2000 HRPD is illustrated. The HRPD Forward Channel, as shown, may consist of the following time-multiplexed channels - the Pilot Channel, the Forward Medium Access Control ("MAC") Channel, and the Forward Traffic Channel or the Control Channel. The Traffic Channel carries user data packets. The Control Channel may carry control messages. Moreover, the Traffic Channel may also carry user traffic. Each channel may be further decomposed into code-division-multiplexed quadrature Walsh channels.

As shown, the forward link may also consist of slots of length 2048 chips (1.66 ... ms). Within each slot, the Pilot, MAC, and Traffic or Control Channels are time-division multiplexed. All time-division-multiplexed channels may be transmitted at the maximum power of the sector. The Pilot Channel may consist of all-'0' symbols transmitted on the I channel with Walsh cover 0. Each slot may be divided into two half slots, wherein each may contain a pilot burst. Each pilot burst may have a duration of 96 chips and may be centered at the midpoint of the half slot.

Moreover, the MAC Channel may consist of three subchannels. Theses subchannels may include the Reverse Power Control ("RPC") Channel, the Reverse Activity ("RA") Channel and the DRCLock channel. The RA Channel transmits a reverse link activity bit (RAB) stream.

The Forward MAC Channel may be composed of Walsh channels that are orthogonally covered and BPSK modulated on a particular phase of the carrier (e. g., either in-phase or quadrature phase). Each Walsh channel is identified by a MACIndex value that is between 0 and 63 and may define a unique 64-ary Walsh cover and a unique modulation phase. The Walsh functions assigned to the MACIndex values may be as follows:

$$W^{64}_{i/2} \text{ for } i = 0, 2, \ldots, 62$$
$$W^{64}_{(i-1)/2+32} \text{ for } i = 1, 3, \ldots, 63$$

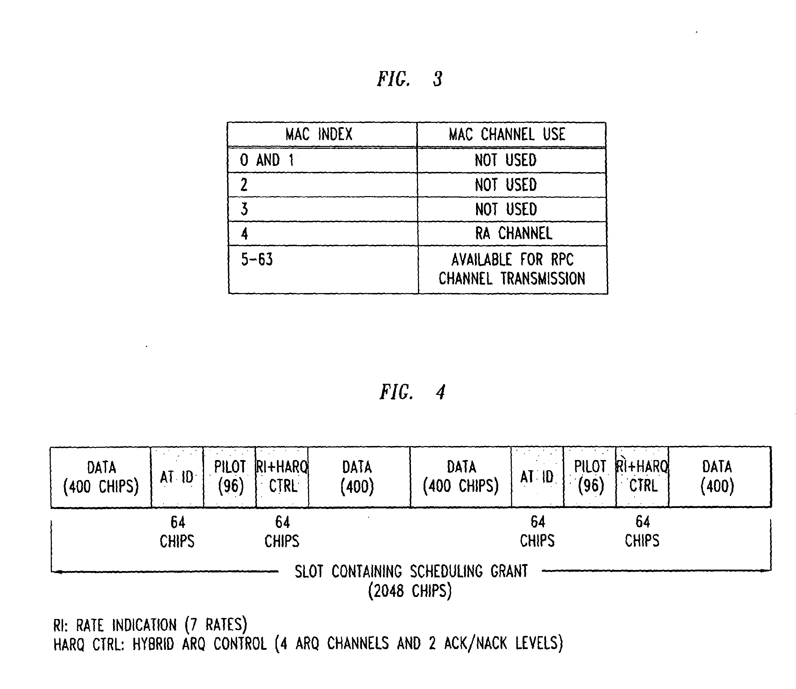

where *i* is the MACIndex value. MAC Channels with even-numbered MACIndex values may be assigned to the in-phase (I) modulation phase, while those with odd-numbered MACIndex values may be assigned to the quadrature (Q) modulation phase. The MAC symbol Walsh covers may be transmitted four times per slot in bursts of length 64 chips each. These bursts may be transmitted immediately preceding and following the pilot bursts of each slot, as shown in **FIG. 2**. The MAC Channel use versus MACIndex may be realized as shown in the exemplary table in **FIG. 3**.

The RPC Channel for each access terminal with an open connection is assigned to one of the available MAC Channels. It may be used for the transmission of the RPC bit stream destined to that access terminal. The RPC data rate may be 600 bps. Each RPC symbol may be transmitted four times per slot in two bursts of 64 chips each. The two bursts may be transmitted immediately preceding and following the pilot bursts in a slot. The RA Channel may transmit the Reverse Activity Bit (RAB) stream over the MAC Channel with MACIndex 4.

As noted hereinabove, a code-multiplexed scheduling grant channel, in some cases, may not be used in the CDMA2000 HRPD. This may be attributed to the realization that the FL may employ a time-multiplexed slot structure. Consequently, a method for transmitting control information, including include at least one scheduling grant(s), and/or transmit power control ("TPC") information, for reverse link packet transmission is required. Such a method for transmitting the control information for reverse link packet transmission may incorporate various differing schemes, detailed hereinbelow, including, for example, the use of a MAC field in the forward link slot to carry the scheduling grants for RL packet transmission.

## Forward Link Scheduling Grant Carried Using MAC Indices

In one embodiment, each active mobile having an open connection may be allocated a unique MACIndex that is used as AT ID in order to indicate to a particular mobile if it has been scheduled for RL packet transmission or not. The AT ID may be carried in two 64 chips MAC bursts immediately preceding the pilot burst. Rate Indication ("RI") and HARQ control information (e.g., 56 combinations) may also be carried in two 64 chips MAC bursts immediately following the pilot bursts, as shown in **FIG. 4**.

As the MACIndices may be transmitted in Walsh code bursts of length 64 chips, a 6 bits (e.g., $\log_2 64$) of control information can be carried in a MACIndex of length 64 chips. The existing MACIndices that are currently not in use and also the MAXIndices that are currently used for TPC bits can be employed to carry the scheduling grants to the mobile station. In order to make the transmission of the MACIndex more reliable transmission can be performed over multiple slots. For example, four times per slot in bursts of length 64 chips each.

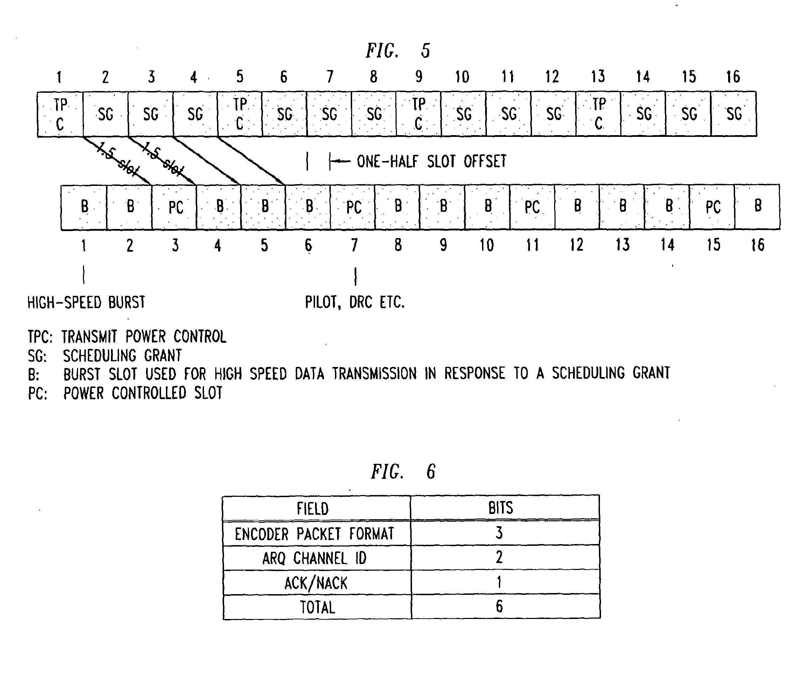

In order to support both the TPC bits and the scheduling grant dedicated MACIndex transmission simultaneously, orthogonal Walsh covers may be needed. However, it may also be possible to time-multiplex the TPC bits and the scheduling grant MacIndex or MACIndex may, for example, carry the TPC bit in some slots and the scheduling grant in one or more of the remaining slots, as shown in **FIG. 5**. This may provide the benefit of supporting a larger number of simultaneously active wireless units, though it is conceivable that this may be achieved at the expense of decreased power control frequency. An example of the rate indication and the HARQ control information carried over the FL is shown in the common MACIndex format table depicting fields and bits of FIG. 6. The 6-bits of control information may be sent using a Walsh code of length 64 chips.

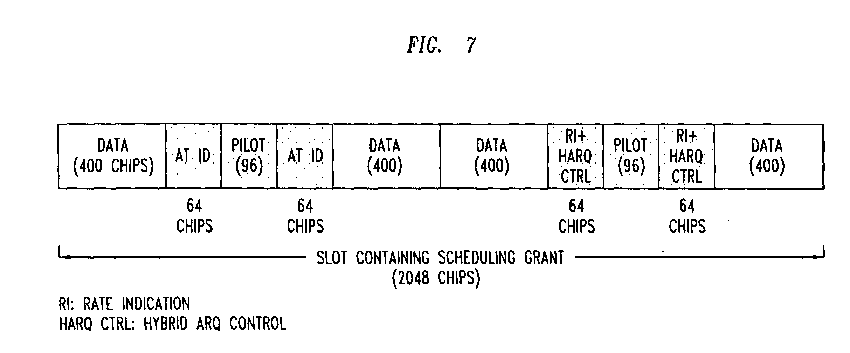

A further embodiment of a slot containing the scheduling grant is shown in **FIG. 7**. Here, the AT ID may be transmitted in the 64 chips burst immediately preceding and following the burst pilot in the first half slot. RI and HARQ control may be transmitted in the 64 chips burst immediately preceding and following the burst pilot in the second half slot. This structure has the benefit that only the scheduled AT may have to decode the second half slot containing the RI and HARQ control information, potentially saving battery life for the active terminals (e.g., ATs) not scheduled (e.g., which may be known after decoding the AT ID in the first half slot).

## Scheduling Grant Transmission Using TDM Control Channel

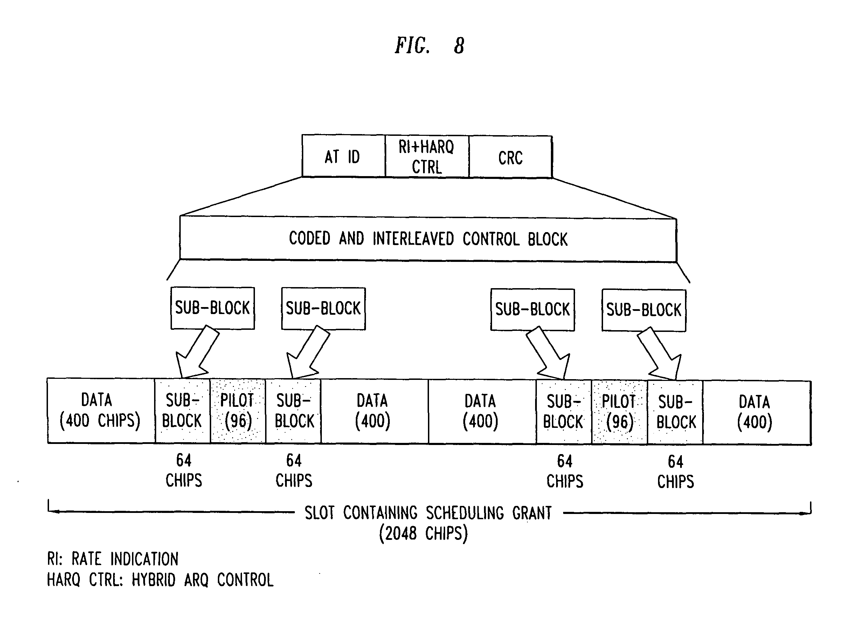

A further embodiment of a scheduling grant transmission technique using a TDM control channel is shown in **FIG. 8**. Here, the control information such as AT ID, rate indication and HARQ control may be first coded together using a convolutional or block code. The coded information may then be interleaved. Thereafter, the coded and interleaved information may be subdivided into sub-blocks that may be transmitted in the MAC fields of the forward link slot. All available Walsh codes or a subset of the Walsh codes in the MAC field can be used for sub-block transmission. The control block transmission may also be performed over multiple slots in order to improve the reliability of the control information.

### Scheduling Grant Information Punctured Into The Data Fields

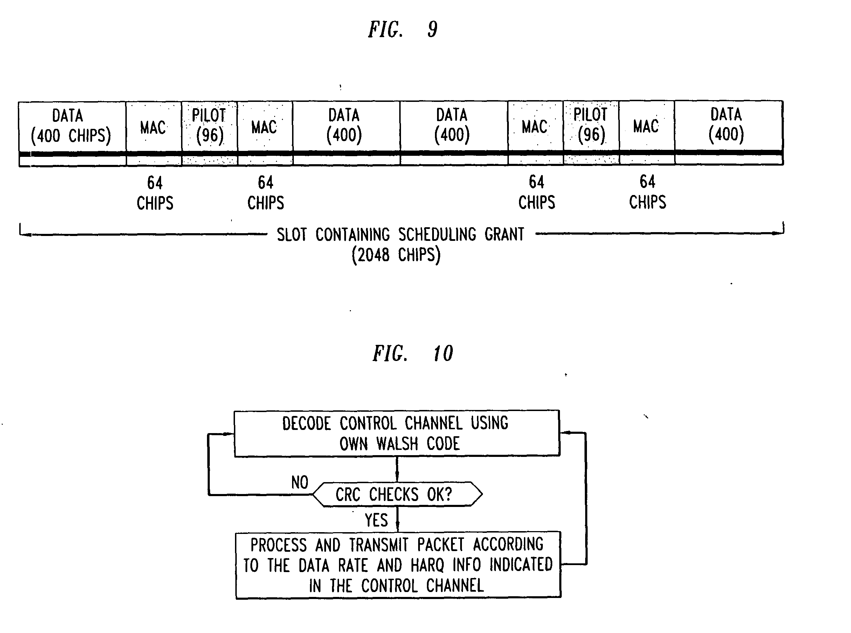

A further embodiment of a scheduling grant information technique punctured into the data fields is shown in **FIG. 9**. Each user in the cell may be allocated a unique Walsh code. The control information, such as AT ID, rate indication and HARQ control may be first CRC protected, coded and interleaved. The coded and interleaved information may be then carried over the user specific Walsh code in the data field of the forward link slot. As all the Walsh codes may be already used for data transmission in the data fields, the control information may then be punctured into the data field.

Here, each user may try to decode the control information using its own Walsh code. This methodology is depicted in the flow chart of FIG. 10. If the CRC checks determines this to be OK, then the user may process and transmit the packet on the reverse link using rate indication and the HARQ control information in the control channel. However, if the CRC check determines this not to be OK, the control channel is decoded again.

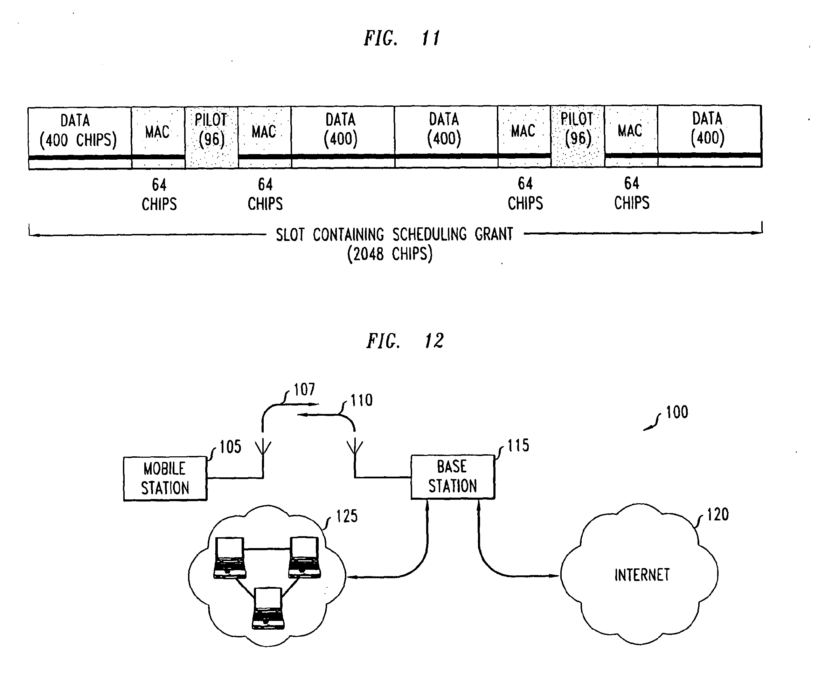

Another embodiment of a scheduling grant information technique is shown in **FIG. 11**. Here, the control channel may be punctured. This puncturing step carries the control channel into both the data fields and the MAC fields.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as the wireless unit, the base station, a base station controller and/ or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the spirit and scope of the present invention It is therefore contemplated that the appended claims will cover any such modifications or embodiments as fall within the true scope of the invention.

### Claims

1. A method of wireless communication comprising:

   transmitting forward link data having at least one time multiplexed scheduling grant, the at least one time multiplexed scheduling grant comprising at least one of user identification information, rate indication information, transmit power control information and HARQ information.

2. The method of Claim 1, wherein the scheduling grant is transmitted in a MAC field of a forward link slot.

3. The method of Claim 1, wherein the scheduling grant is punctured into the forward link data.

4. The method of Claim 1, wherein the scheduling grant is coded and interleaved and transmitted in a forward link MAC field.

5. A method of wireless communication comprising:

   receiving forward link data having at least one time multiplexed scheduling grant, the at least one time multiplexed scheduling grant comprising at least one of user identification information, rate indication information, transmit power control information and HARQ information.

6. The method of Claim 5, wherein the scheduling grant is received in a MAC field of a forward link slot.

7. The method of Claim 5, wherein the scheduling grant is unpunctured from the forward link data.

8. The method of Claim 5, wherein the scheduling grant is decoded and deinterleaved and received in a forward link MAC field.

9. A method of wireless communication comprising:

   transmitting a packet in response to receiving at least one scheduling grant, the at least one scheduling grant comprising at least one of user identification information, rate indication information, transmit power control information and HARQ information.

**10.** The method of Claim 9, wherein the step of transmitting the packet comprises coding a data block in response to the rate indication information.

**11.** The method of Claim 9, wherein the step of transmitting the packet comprises transmitting the packet in response to the HARQ information.

**12.** The method of Claim 9, wherein the step of receiving a scheduling grant comprises:

detecting an energy on the Walsh codes; and

determining if control information is for the user based on the detected energy.

## FIG. 1

FL [ F-USCH (FOR RL FRAME n) ]

RL [ R-SCH FRAME (n-1) ] [ R-SCH FRAME ]

F-USCH DECODING +
SCH SUBPACKET
FORMATION TIME

R-SCH FRAME

## FIG. 2

| ◄——————— 1/2 SLOT 1,024 CHIPS ———————► | | | | | | 1/2 SLOT 1,024 CHIPS ———————► | | | |
|---|---|---|---|---|---|---|---|---|---|
| DATA 400 CHIPS | MAC 64 CHIPS | PILOT 96 CHIPS | MAC 64 CHIPS | DATA 400 CHIPS | DATA 400 CHIPS | MAC 64 CHIPS | PILOT 96 CHIPS | MAC 64 CHIPS | DATA 400 CHIPS |

ACTIVE SLOT

| MAC 64 CHIPS | PILOT 96 CHIPS | MAC 64 CHIPS | | MAC 64 CHIPS | PILOT 96 CHIPS | MAC 64 CHIPS |
|---|---|---|---|---|---|---|

IDLE SLOT

EP 1 463 217 A1

## FIG. 3

| MAC INDEX | MAC CHANNEL USE |
|---|---|
| 0 AND 1 | NOT USED |
| 2 | NOT USED |
| 3 | NOT USED |
| 4 | RA CHANNEL |
| 5-63 | AVAILABLE FOR RPC CHANNEL TRANSMISSION |

## FIG. 4

| DATA (400 CHIPS) | AT ID | PILOT (96) | RI+HARQ CTRL | DATA (400) | DATA (400 CHIPS) | AT ID | PILOT (96) | RI+HARQ CTRL | DATA (400) |
|---|---|---|---|---|---|---|---|---|---|
| | 64 CHIPS | 64 CHIPS | | | | 64 CHIPS | 64 CHIPS | | |

SLOT CONTAINING SCHEDULING GRANT (2048 CHIPS)

RI: RATE INDICATION (7 RATES)
HARQ CTRL: HYBRID ARQ CONTROL (4 ARQ CHANNELS AND 2 ACK/NACK LEVELS)

## FIG. 5

HIGH-SPEED BURST          PILOT, DRC ETC.

TPC: TRANSMIT POWER CONTROL
SG:  SCHEDULING GRANT
B:   BURST SLOT USED FOR HIGH SPEED DATA TRANSMISSION IN RESPONSE TO A SCHEDULING GRANT
PC:  POWER CONTROLLED SLOT

## FIG. 6

| FIELD | BITS |
|---|---|
| ENCODER PACKET FORMAT | 3 |
| ARQ CHANNEL ID | 2 |
| ACK/NACK | 1 |
| TOTAL | 6 |

*FIG. 7*

| DATA (400 CHIPS) | AT ID | PILOT (96) | AT ID | DATA (400) | DATA (400) | RI+ HARQ CTRL | PILOT (96) | RI+ HARQ CTRL | DATA (400) |
|---|---|---|---|---|---|---|---|---|---|
| | 64 CHIPS | | 64 CHIPS | | | 64 CHIPS | | 64 CHIPS | |

SLOT CONTAINING SCHEDULING GRANT (2048 CHIPS)

RI: RATE INDICATION
HARQ CTRL: HYBRID ARQ CONTROL

EP 1 463 217 A1

FIG. 8

| AT ID | RI+HARQ CTRL | CRC |
|---|---|---|

CODED AND INTERLEAVED CONTROL BLOCK

SUB-BLOCK    SUB-BLOCK              SUB-BLOCK    SUB-BLOCK

| DATA (400 CHIPS) | SUB-BLOCK | PILOT (96) | SUB-BLOCK | DATA (400) | DATA (400) | SUB-BLOCK | PILOT (96) | SUB-BLOCK | DATA (400) |
|---|---|---|---|---|---|---|---|---|---|

64 CHIPS        64 CHIPS                  64 CHIPS     64 CHIPS

SLOT CONTAINING SCHEDULING GRANT
(2048 CHIPS)

RI: RATE INDICATION
HARQ CTRL: HYBRID ARQ CONTROL

EP 1 463 217 A1

FIG. 9

| DATA (400 CHIPS) | MAC | PILOT (96) | MAC | DATA (400) | DATA (400) | MAC | PILOT (96) | MAC | DATA (400) |
|---|---|---|---|---|---|---|---|---|---|

64 CHIPS     64 CHIPS     64 CHIPS     64 CHIPS

SLOT CONTAINING SCHEDULING GRANT
(2048 CHIPS)

FIG. 10

DECODE CONTROL CHANNEL USING OWN WALSH CODE

NO ← CRC CHECKS OK?

YES ↓

PROCESS AND TRANSMIT PACKET ACCORDING TO THE DATA RATE AND HARQ INFO INDICATED IN THE CONTROL CHANNEL

EP 1 463 217 A1

*FIG. 11*

| DATA (400 CHIPS) | MAC | PILOT (96) | MAC | DATA (400) | DATA (400) | MAC | PILOT (96) | MAC | DATA (400) |
|---|---|---|---|---|---|---|---|---|---|

64 CHIPS     64 CHIPS         64 CHIPS     64 CHIPS

——— SLOT CONTAINING SCHEDULING GRANT ———
(2048 CHIPS)

*FIG. 12*

EP 1 463 217 A1

European Patent
Office

**EUROPEAN SEARCH REPORT**

Application Number

EP 04 25 0919

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "cdma2000 High Rate Packet Data Air Interface Specification C.S0024, Version 4.0" 3GPP2 SPECIFICATION, 25 October 2002 (2002-10-25), XP002277785 Page 8-13, paragraph 8.2.6.1.4.2.4 Page 8-40, paragraph 8.4.6.1.2 Page 9-28, paragraph 9.2.1.2.1.2 Page 9-38, paragraph 9.2.1..3.1.2 Page 9-39, paragraph 9.2.1.3.3 Page 9-62, paragraph 9.3.1.3.1 Page 9-71, paragraph 9.3.1.3.2.2 Page 9-72, paragraph 9.3.1.3.2.2.2 * figure 9.3.1.3.2.2.3 * | 1-8 | H04B7/26 |
| Y | | 9-12 | |
| Y | KWOK Y-K ET AL: "Optimal admission control algorithms for scheduling burst data in CDMA multimedia systems" COMPUTER NETWORKS, ELSEVIER SCIENCE PUBLISHERS B.V., AMSTERDAM, NL, vol. 38, no. 6, 22 April 2002 (2002-04-22), pages 765-777, XP004345781 ISSN: 1389-1286 * abstract * * page 766, line 11 - line 24 * * page 769, paragraph 3 - page 770, paragraph 3.1.2 * | 9-12 | |
| Y | 3GPP/ETSI: "Universal Mobile Telecommunications System (UMTS); UTRA high speed downlink packet access (*GPP TR 25.950 version 4.0.0. Release 4)" 3GPP TECHNICAL REPORT, March 2001 (2001-03), XP002277789 * page 12 - page 13 * | 11 | |

TECHNICAL FIELDS
SEARCHED     (Int.Cl.7)

H04B

-/--

The present search report has been drawn up for all claims

| Place of search | Date of completion of the search | Examiner |
|---|---|---|
| Munich | 23 April 2004 | Draper, A |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**European Patent Office**

**EUROPEAN SEARCH REPORT**

Application Number

EP 04 25 0919

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHAKRAVARTY S ; PANKAJ R ; ESTEVES E: "An algorithm for reverse traffic channel rate control for cdma2000 high rate packet data systems" GLOBECOM'01. IEEE GLOBAL TELECOMMUNICATIONS CONFERENCE, SAN ANTONIO, TX, USA, 25-29 NOV. 2001, November 2001 (2001-11), XP002277693 Second page, left-hand column, top paragraph Third page, left-hand column, third paragraph * abstract * | 1,2,5,6, 9,10 | |
| A | QUALCOMM INC.: "1xEV: 1xEVolution IS-856 TIA/EIA Standard Airlink Overview Rev. 7.2" QUALCOMM INC., 7 November 2001 (2001-11-07), XP002277692 * page 8, paragraph 2 - page 9, paragraph 2 * * figure 3 * * page 11, paragraph 3 - paragraph 4 * * page 12, paragraph 2.5 - page 13 * | | |
| A | YONGHOON CHOI ET AL: "A channel-based scheduling algorithm for cdms2000 1xEV-DO system" PROCEEDINGS OF 13TH IEEE INTERNATIONAL SYMPOSIUM ON PERSONAL INDOOR AND MOBILE RADIO COMMUNICATIONS PIMRC 20020, PAVILHAO ALTANTICO, LISBOA, PORTUGAL, 15-18 SEPT. 2002, vol. 5, 15 September 2002 (2002-09-15), pages 2259-2263, XP010614130 * the whole document * | | |

TECHNICAL FIELDS SEARCHED (Int.Cl.7)

-/--

The present search report has been drawn up for all claims

| Place of search | Date of completion of the search | Examiner |
|---|---|---|
| Munich | 23 April 2004 | Draper, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 04 25 0919

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KWOK Y-K ET AL: "Performance evaluation of multiple access control schemes for wireless multimedia services" IEE PROCEEDINGS : COMMUNICATIONS, INSTITUTION OF ELECTRICAL ENGINEERS, GB, vol. 148, no. 2, 17 April 2001 (2001-04-17), pages 86-94, XP006016600 ISSN: 1350-2425 * the whole document * | | |
| A | DAMNJANOVIC J ET AL: "Scheduling the cdma2000 reverse link" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, vol. VOL. 1 OF 4. CONF. 56, 24 September 2002 (2002-09-24), pages 386-390, XP010608583 ISBN: 0-7803-7467-3 * the whole document * | | TECHNICAL FIELDS SEARCHED (Int.Cl.7) |

The present search report has been drawn up for all claims

| Place of search | Date of completion of the search | Examiner |
|---|---|---|
| Munich | 23 April 2004 | Draper, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)